# EUROPEAN PATENT APPLICATION

(11) **EP 3 926 290 A1**
(43) Date of publication of application: **22.12.2021**
(21) Application number: 21179300.5
(22) Date of filing: 14.06.2021
(51) Int. Cl.: F41H 5/013, B60R 11/04, F41H 5/04

(54) **BALLISTIC GLAZING**

(30) Priority: 17.06.2020 BR 102020012205
(71) Applicant: Pg Products Indústria e Comércio de Vidros Ltda., 06711-270 Cotia SP (BR)
(72) Inventor: Yoshikuma, Edson Maury, 06711-270 Cotia SP (BR)
(74) Representative: Calysta NV

(57) **Abstract**

The present invention relates to ballistic glazing and smart devices. Specifically, the present invention refers to a ballistic glazing comprising a ballistic reinforcement, which is applied to automotive vehicles, military, agricultural and/or off-road machinery. The ballistic glazing (10) comprises a blade (11) and a ballistic block (12) and comprises a reinforcement assembly (20) comprising a guard plate (24), a base (21) and an empty space (26) between the guard plate (24) and the base (21), wherein the blade (11) and the ballistic block (12) comprise, respectively, a first portion (13) and a second portion (14, 15), the first (13) and second (14, 15) portions have corresponding shapes and are vertically aligned with each other, and the first (13) portion is configured to allocate a plurality of smart devices and the second portion is configured to receive the reinforcement assembly (20).

## Description

### Field of the invention

The present invention concerns a ballistic glazing and additional protection for the region of smart devices. Specifically, to a ballistic glazing comprising a ballistic reinforcement, which is applied to automotive, military, agricultural and/or off-road machinery.

### Description of the state of the art

With the progressive increase of violence rates worldwide, the vehicle armor market is expanding and, with this, the need for innovations in ballistic resistance components, whether opaque or clear components, which integrate the final products.

Bullet-resistant components and products have their protection levels divided according to the technical standards of the respective markets of use.

Solutions to meet the different levels are numerous, with different manufacturers having different "composition recipes" to meet one or more levels.

In parallel, with innovation and the search for vehicular autonomy, the vast majority of motor vehicles are equipped with smart devices, mostly applied to vehicle windshields, devices that aim to ensure a better experience for the driver and passengers.

However, it should be noted that bullet-resistant glasses, in general, are thicker than conventional glasses, so that the thickness of the glass directly affects the functionality of these smart devices, which lose partially and/or even totally its performance characteristics the greater the thickness of the ballistic glazing.

Specifically, it is observed that the performance of smart devices, such as cameras and weather sensors, are negatively influenced the greater the thickness of the ballistic glazing, as well as the number of layers that make it up, where each layer works as a interface of different thicknesses and densities, hence implying in weakening and distortions in signal refractions.

Other aspects that affect functionality of these devices are distance, positioning, angle and the vehicle's external environment, as well as the origin/manufacture, including variations in adjustments and sensitivities between different manufacturers.

In addition, small dirt on a ballistic glazing also affect more the sensitivity (functionality and performance) of cameras and sensors as compared to dirt on conventional glasses.

That being said, in order to solve the above problems, a ballistic glazing with a recess is commonly known, that is, in which part of the ballistic block material in the region that will cover the smart devices on the windshield is removed, followed by the insertion of brackets attached directly onto the inner face of the ballistic glazing sheet, which is subsequently mounted on the windshield.

To this end, there is a need to provide the region in which the ballistic material was removed from a mechanical overlap attached to the vehicle body, as well as possibly providing the ballistic glazing with a base glued to the inner face of the blade.

Mechanical reinforcements merely attached to the vehicle body and superimposed/glued to the ballistic glazing result in a vulnerable region and do not ensure the retention of a possible projectile, being detachable, displaceable and/or bendable, allowing projectile perforation.

Also, glues and adhesives have limited expiration dates, so their application requires special care and, as for referring to a chemical product, it can attack the constituent materials of the ballistic glazing, especially the most internal one.

Therefore, in this type of solution, although one seeks to ensure functionality of smart devices, the use of glues and adhesives does not ensure their full operation in any situation when driving the vehicle, for example, delaying or preventing actuation of a certain smart device, in addition to the fact that due to the vulnerable region, the user is not guaranteed the expected safety of a ballistic glazing, since in the event of an incident with a projectile, it will easily pass through the vulnerable region, entering the passenger compartment.

Thus, it is evident that the combination of ballistic technology together with vehicular autonomy lacks technical solutions relative to user safety as well as the correct operation of smart vehicular devices.

### Objectives of the invention

Therefore, an object of the present invention is to ensure the operation and performance of smart vehicular devices applied to ballistic glazing.

Moreover, the present invention is intended to provide ballistic resistance in the vulnerable region where these devices are placed.

### Brief description of the invention

The objects of the present invention are achieved through a ballistic glazing comprising an outer sheet and a ballistic block, the ballistic glazing being defined in that the outer sheet comprises a first portion configured to receive a plurality of smart devices, the ballistic block comprises a second portion configured to receive a reinforcement assembly, the reinforcement assembly comprising a base comprising, in its central portion, a space extending perpendicularly to a protection plate, wherein the first and second portions have corresponding shapes arranged in parallel, so that the plurality of smart devices are allocated in the void of the reinforcement assembly.

It is noted that in the context of the invention, the term smart devices refers to the following sensors: rain, braking, lighting, night vision camera, lane sensor, among others existing or yet to exist.

### Brief description of the figures

The ballistic glazing comprising the ballistic reinforcement of the present invention can be better understood by means of the following detailed description which is based on the figures listed below.
Figure 1 - is an exploded front perspective view of a first embodiment of the ballistic glazing that is the object of the present invention.
Figure 2 - is an exploded front perspective view of a second embodiment of the ballistic glazing that is the object of the present invention.
Figure 3 - is an exploded front perspective view of the reinforcement assembly shown in Figure 1.
Figure 4 - is an exploded front perspective view of the reinforcement assembly shown in Figure 2.
Figure 5 - is an exploded front perspective view of an alternative second embodiment of the ballistic glazing shown in Figure 1.
Figure 6 - is an exploded rear perspective view of an alternative embodiment of the reinforcement assembly shown in Figure 1.
Figure 7 - is an exploded front perspective view of an alternative second embodiment of the ballistic glazing shown in Figure 2.
Figure 8 - is an exploded rear perspective view of an alternative embodiment of the reinforcement assembly shown in Figure 2.

### Detailed description of the figures

In order to overcome the drawbacks of the state of the art, in general, the object of the present invention comprises three components, namely, a sheet 11, a ballistic block 12 and a reinforcement assembly 20.

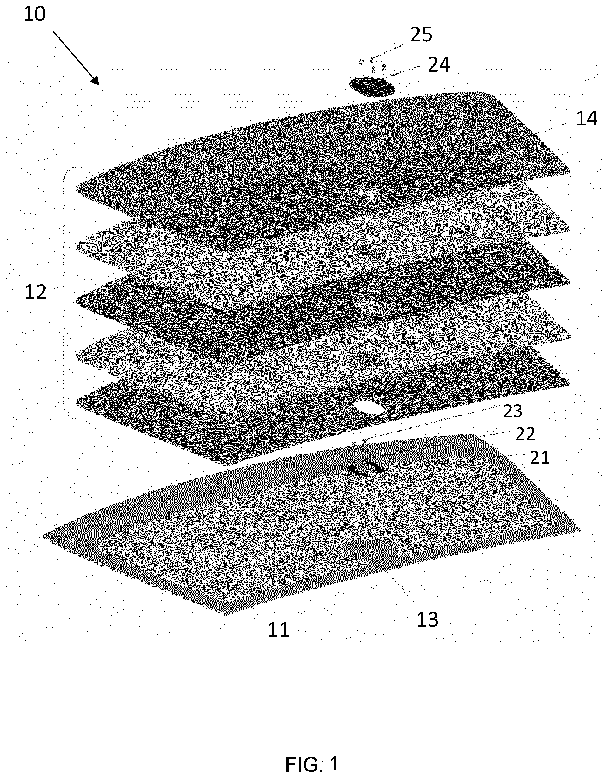

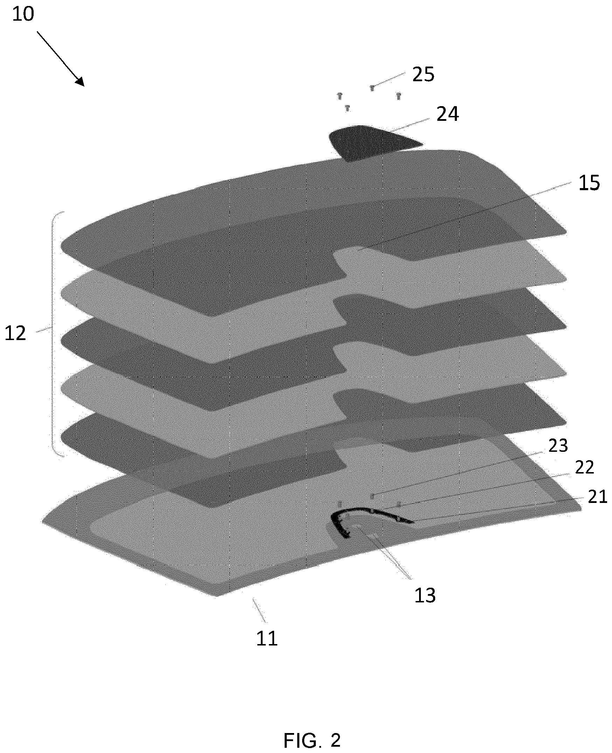

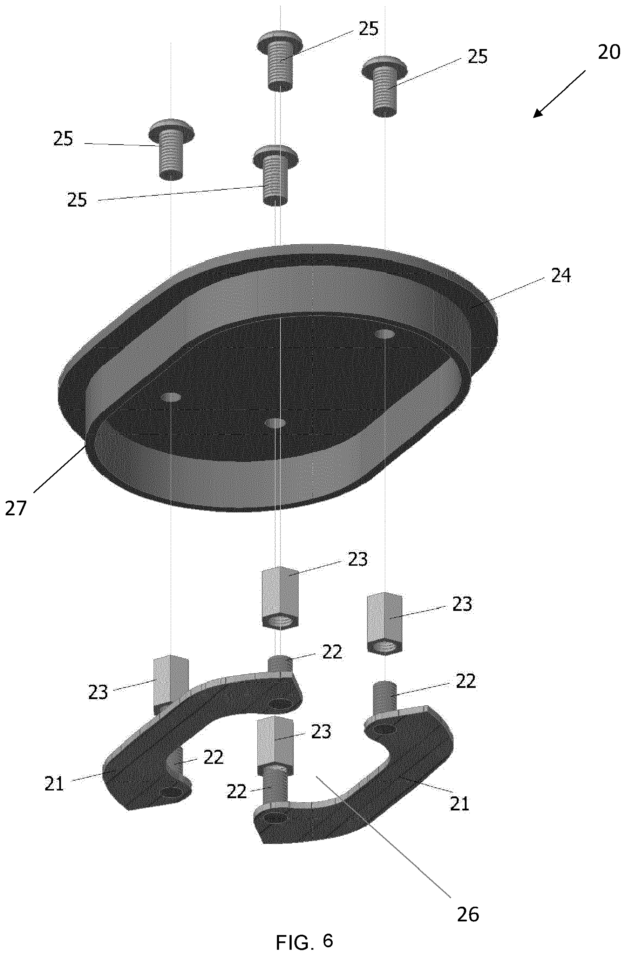

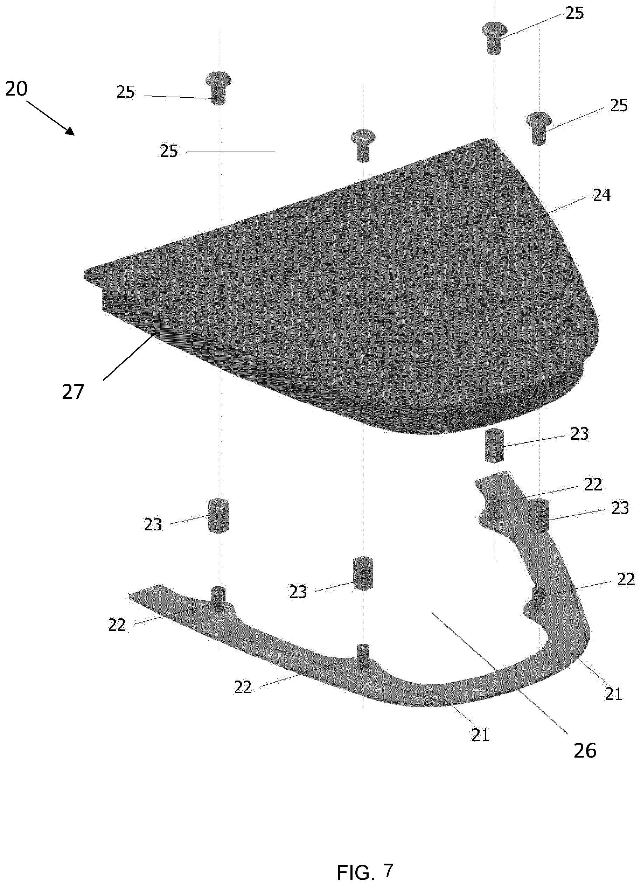

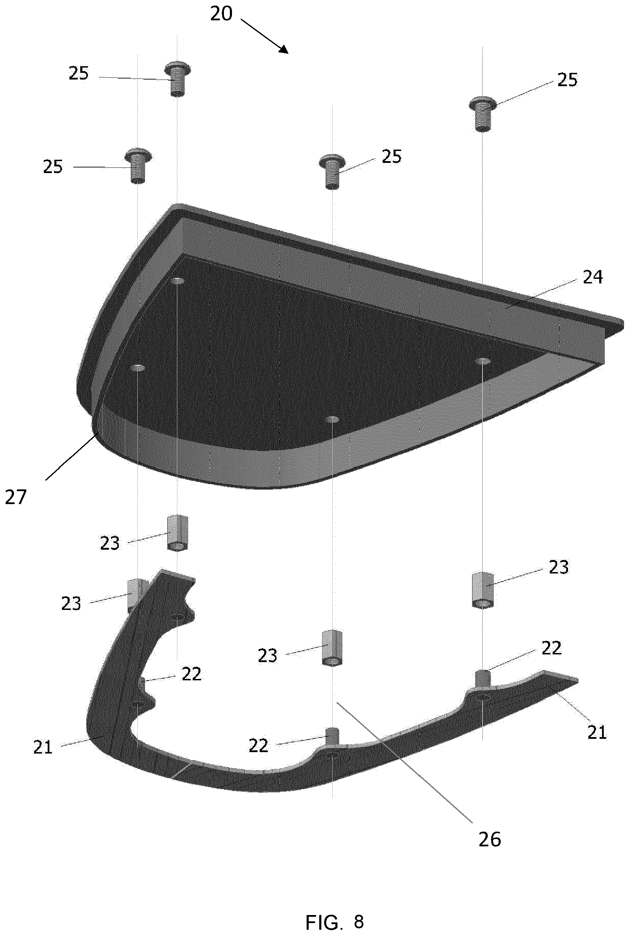

As shown in figures 1 to 8, the ballistic glazing 10 that is the object of the present invention comprises a sheet 11, a ballistic block 12 and a reinforcement assembly 20 comprising a guard plate 24, a base 21 and an empty space 26 between the guard plate 24 and the base 21, the space 26 extending vertically from a central portion of base 21 to the guard plate 24.

Specifically, the sheet 11 and the ballistic block 12 comprise, respectively, a first portion 13 and a second portion 14, 15, the first 13 and second 14, 15 portions have corresponding shapes and are vertically aligned with each other, wherein the first 13 portion is configured to receive a plurality of smart devices and the second portion is configured to receive reinforcement assembly 20.

Thus, the above configuration allows the plurality of smart devices to be allocated in the space 26 of the reinforcement assembly 20.

It is noteworthy that the ballistic block 12 together with the outer sheet 11 provides a certain bullet resistance to the ballistic glazing 10.

It should be noted that it does not matter how many inner layers of the different materials of the ballistic block 12 are, since the reinforcement assembly 20 has a size (height) corresponding to the ballistic block 12.

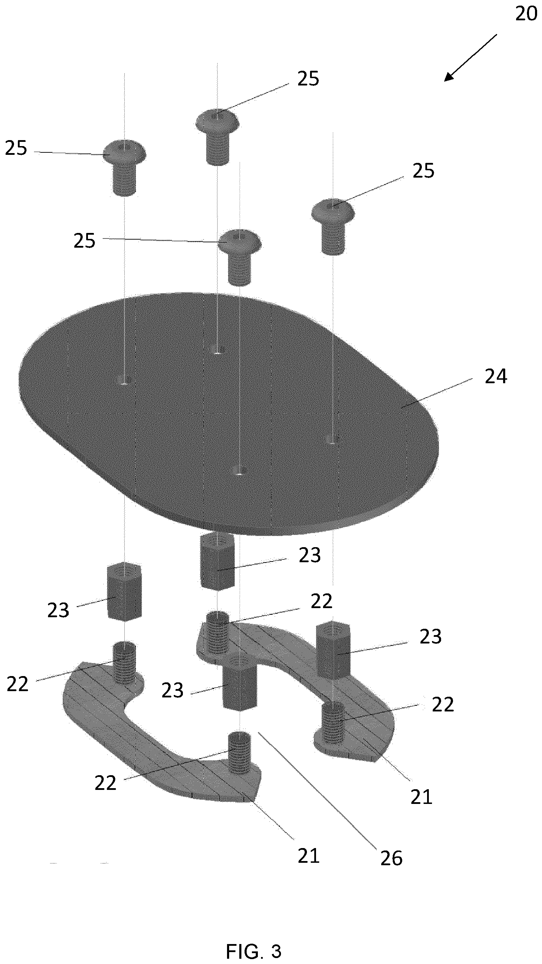

In particular, as seen in figures 3 to 8, they illustrate two embodiments of the object of the present invention, that is, two construction variants of the ballistic glazing 10, a first variant provided with a second portion 14 in the shape of an orifice and a second variant provided with a second portion 15 in clipping shape, both variants covering all layers of materials of the ballistic composition, which constitute the ballistic block 12.

It is noteworthy that although it is shown in the figures and described in the present text that the object of the invention comprises two particular embodiments, it should be noted that any shapes of the second portion 14, 15 as well as the first portion 13 are admissible for the realization of the object of the invention.

It should be noted that, regardless of the embodiment of the present invention, the second portion 14,15 of the ballistic block 12 assumes a shape corresponding to the first portion 13 of the blade 11, which is configured to receive the smart devices, so that both portions are overlapping and vertically aligned.

This is because the amount, arrangement, dimensions and geometry of the first portion 13 on the surface of the blade 11 of the ballistic glazing 10, for the purposes of arrangement of the smart devices, follow the configuration of the corresponding glass of the not armored, manufacturer of the original equipment (OEM).

Furthermore, it should be noted that although it is shown in the figures and described in the present text that the first 13 and second 14, 15 portions are positioned in the upper central part of the blade 11 and the ballistic block 12, that is, in the upper central part of the motor vehicle windshield, said portions can assume any location/position in any part of the windshield, depending on the need and specificities of each project.

Furthermore, it is noteworthy that more than a first 13 and a second 14, 15 portions can be included in the blade 11 and in the ballistic block 12, and these can still be arranged in any parts of the windshield, depending on the need and specificities of each project.

In continuity, as previously mentioned, removal of material from the ballistic block 12 weakens the ballistic glazing, where it will no longer offer the ballistic resistance at the intended or declared level for safe use, thus, it is through the reinforcement assembly 20 together with the manner by which this is mounted on the second 14, 15 portion of the ballistic glazing that the present invention aims to overcome the defects found in the vulnerable region of the ballistic glazing, so that, even with ballistic impact there is no detachment of the reinforcement assembly 20, preventing perforation of the ballistic glazing 10 by a projectile.

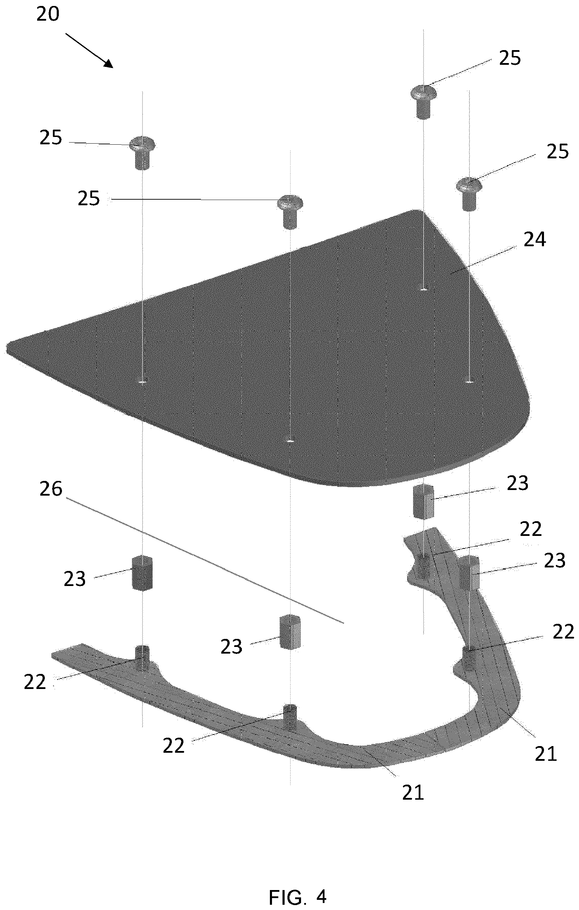

Particularly with respect to the reinforcement assembly 20, as shown in Figures 3 and 4, it comprises the base 21, a guard plate 24 and an empty space 26 extending from the central region of the base 21 to the guard plate 24 .

It is noteworthy that the empty space 26 provides an area for the correct and proper functioning of smart devices, as it avoids any distortions in signal refraction from these devices.

More specifically, the base 21 comprises a single body or a split body or more parts, both bodies provided with an empty space 26 in its central region so that, in both embodiments, the base is embedded in the ballistic block 12, being rigidly attached to ballistic glazing 10.

The base 21 is embedded to the ballistic block by a rolling process, providing permanent attachment to the ballistic glazing.

It should be noted that any shapes and processes of attachment of the base 21 to the ballistic block 12 are permissible as long as it is rigidly attached to the block and ensures the impact forces of a projectile, without detaching from the reinforcement assembly 20.

With respect to the guard plate 24, it aims to retain and/or deflect the projectile when it reaches the ballistic glazing in the region of smart devices, avoiding perforation into the vehicle's passenger compartment.

It is noteworthy that the guard plate 24 comprising material and geometry defined by the shielder.

Preferably, but not in a limiting manner, the guard plate can comprise high impact resistant metallic material or high impact resistant ceramic material.

In order to provide better performance to the reinforcement assembly 20, the shielder may provide the guard plate 24 with an additional reinforcement 27, so as to include an additional protection to the assembly.

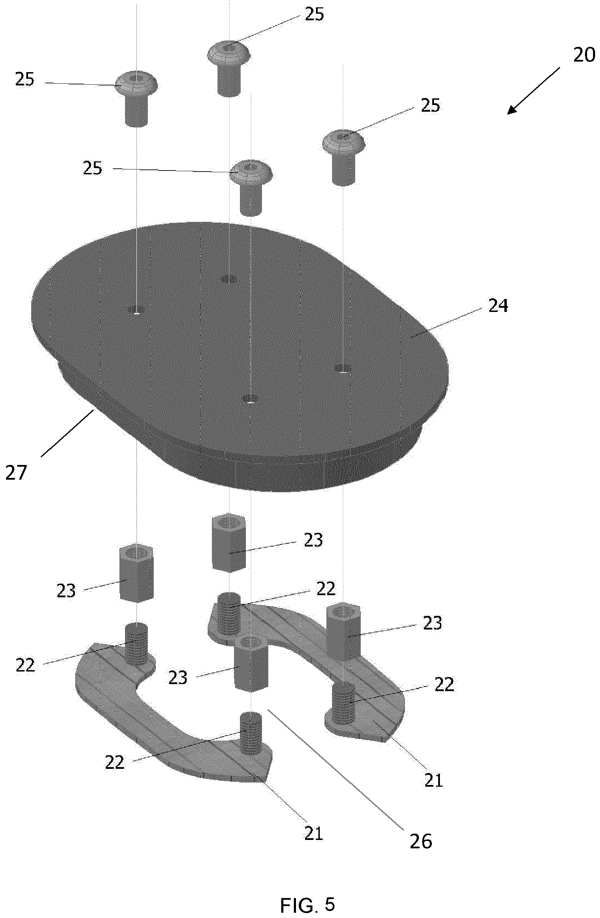

Specifically, in a preferable, but not limiting manner, as shown in Figures 5 to 8, the additional protection is provided by means of an additional reinforcement 27 extending perpendicularly to the guard plate 24 and towards the base 21, thus creating an envelope surrouding the empty space 26, whose 'three-dimensional' geometry is variable as a function of the height of the empty space 26.

Thus, advantageously and in view of the specific needs of the design, the additional reinforcement 27 protects the housing against a projectile side perforation, irrespective of the impact angle.

Furthermore, the reinforcement assembly 20 of the ballistic glazing 10 of the present invention comprises a base 21 and the guard plate 24 with a thickness ranging from 0.5 to 20mm, which is defined as a function of the required level of ballistic resistance for ballistic glazing.

Although one embodiment of the reinforcement assembly 20 is described below in which the use of fastening elements 22 and connecting elements 23 is considered, it should be noted that the reinforcement assembly 20 of the object of the present invention can be made by any processes that result in a single piece, without the need for such elements 22, 23, provided that the specificities of the project are respected.

Thus, in a preferred but non-limiting manner, the base 21 comprises a plurality of fastening elements 22 for fastening the guard plate 24 to the base 21, so as to delimit the empty space 26 between the base 21 and the guard plate 24.

The guard plate 24 further comprises as many holes as the number of fastening elements of the base 21 for fastening the guard plate to the base 21, when the reinforcement assembly 20 is not a single piece.

Furthermore, it should be noted that the base 21, as well as the fastening elements 22 and the connecting elements 23, 25, when the reinforcement assembly 20 does not refer to a single piece, can be comprised of high-impact resistant metallic material or high impact resistant ceramic material, or stainless steel alone.

With regard to the assembly of the reinforcement assembly 20, when it does not refer to a single piece, it is noted that the plurality of fastening elements 22 is welded to the base 21.

Therefore, the guard plate 24 comprises a plurality of connecting elements 23, 25 that can be attached to the plurality of fastening elements 22 of the base 21.

In a preferred, but not limiting manner, the welding is of the capacitive type, wherein the fastening elements 22 correspond to threaded pins.

Also, preferably, but not limitatively, the connecting elements 23, 25 correspond to spacer nuts and threaded screws.

Thus, in an exemplary and non-limiting embodiment, when assembling the reinforcement assembly 20, the guard plate is guided by the fastening elements 22 to be mounted on the spacer nuts 23 and then attached by means of cylindrical thread screws 25, the number of screws being equivalent to the number of fastening elements 22 and nuts 23.

The fastening elements 22 act to receive, each one of them, a nut elongated in its height 23.

The nuts 23, once threaded on the respective fastening elements 22, are intended to establish a distance and/or spacing, acting as spacers between the base 21 and the guard plate 24.

It is important to highlight that the above embodiment is exemplary so that any types of fastening 22 and connecting 23, 25 elements are admissible to the object of the invention provided that the design specificities are respected, the use of fastening elements and universal mold connecting elements being preferable, that is, those that are already commonly known and used in the technical field of ballistic glazing, among others.

That being said, advantageously, the invention discloses a constructive form that secures the vulnerable region of the ballistic glazing 10, so that, even with ballistic impact, the reinforcement assembly 20 does not get loose, avoiding perforation of the ballistic glazing 10 by a projectile.

Specifically, due to crimping of the base 21 to the ballistic block, the use of a guard plate 24 attached to the base 21 and an empty space 26, the reinforcement assembly 20 ensures the retention of any projectile, providing the necessary safety of a ballistic glazing 10, as well as the correct/proper operation of smart devices.

Also, advantageously, the guard plate 24 attached to the embedded base 21 eliminates the need for adhesives for any attachments of the reinforcement assembly, maintaining the warranty/service life of the ballistic glazing 10 and ensuring the correct operation of smart devices.

It is also noteworthy that advantageously the components and constructive form of the present invention result in a reduced assembly time in the shielder, eliminating the need for rework and/or cleaning of adhesives.

Having described a preferred embodiments of the present invention, it should be understood that the scope of the present invention encompasses other possible variations, being limited only by the content of the appended claims, including any possible equivalents thereof.

## Claims

1. A BALLISTIC GLAZING (10) comprising a sheet (11) and a ballistic block (12), the ballistic glazing being **characterized by**
the sheet (11) comprises a first portion (13) configured to receive a plurality of smart devices,
the ballistic block (12) comprises a second (14, 15) portion configured to receive a reinforcement assembly (20),
the reinforcement assembly (20) being composed of a base (21) comprising, in its central portion, an empty space (26) that extends vertically to a guard plate (24), wherein
the first (13) and second (14, 15) portions have corresponding shapes and are aligned vertically to each other so that the plurality of smart devices are allocated in the empty space (26) of the reinforcement assembly (20).

2. The BALLISTIC GLAZING (10), according to claim 1, **characterized in that** the base (21) comprises a single body.

3. The BALLISTIC GLAZING (10), according to claim 1, **characterized in that** the base (21) comprises a bipartite body.

4. The BALLISTIC GLAZING (10), according to any one of claims 1 to 3, **characterized in that** the base (21) is embedded to the ballistic block (12).

5. The BALLISTIC GLAZING (10), according to any one of claims 1 to 4, **characterized in that** the guard plate (24) and/or the base plate (21) is composed of high impact resistance metallic material.

6. The BALLISTIC GLAZING (10), according to any one of claims 1 to 4, **characterized in that** the guard plate (24) and/or base plate (21) comprises ceramic material and/or polymeric material of high impact resistance.

7. The BALLISTIC GLAZING (10), according to any one of claims 1 to 6, **characterized in that** the base (21) and the guard plate (24) comprises a thickness between 0.5 to 20mm.

8. The BALLISTIC GLAZING (10), according to any one of claims 1 to 7, **characterized in that** the base (21) is provided with a plurality of fastening elements (22).

9. The BALLISTIC GLAZING (10) according to claim 8, **characterized in that** the plurality of fastening elements (22) is welded to the base (21).

10. The BALLISTIC GLAZING (10), according to claim 9, **characterized in that** the welding is of the capacitive type wherein the fastening elements (22) correspond to threaded pins.

11. The BALLISTIC GLAZING (10), according to any one of claims 8 to 10, **characterized in that** the guard plate (24) comprises a plurality of connecting elements (23, 25) that can be connected to the plurality of fastening elements (22) of the base (21).

12. The BALLISTIC GLAZING (10) according to claim 1, **characterized in that** the guard plate (24) comprises an additional reinforcement (27) that extends perpendicularly from the guard plate (24) towards the base (21).

13. The BALLISTIC GLAZING (10), according to claim 1, **characterized in that** the second portion (14) comprises a hole.

14. The BALLISTIC GLAZING (10), according to claim 1, **characterized in that** the second portion (15) comprises a clipping.
